# FASCICULE DE BREVET EUROPEEN

(11) **EP 2 129 115 B1**
(45) Date de publication et mention de la délivrance du brevet: **01.05.2019**
(21) Numéro de dépôt: 08157182.0
(22) Date de dépôt: 29.05.2008
(51) Int. Cl.: H04N 7/167, G06F 21/00, H04L 9/32

(54) **Méthode de mise à jour de données de sécurité dans un module de sécurité et module de sécurité pour la mise en oeuvre de cette méthode**
Aktualisierungsmethode von Sicherheitsdaten in einem Sicherheitsmodul und Sicherheitsmodul für die Durchführung dieser Methode
Method for updating security data in a security module and security module for implementing this method

(43) Date de publication de la demande: 02.12.2009
(73) Titulaire: Nagravision S.A., 1033 Cheseaux-sur-Lausanne (CH)
(72) Inventeur: Junod, Pascal, 1302 Vufflens-la-Ville (CH); Brique, Olivier, 1805 Jongny (CH)
(74) Mandataire: Hoyng Rokh Monegier LLP

(56) Documents cités:
- EP-A- 1 720 350
- FR-A- 2 834 158
- US-A- 5 144 664
- US-A- 6 108 422
- US-A1- 2004 190 721
- US-A1- 2005 182 948
- US-A1- 2005 270 840
- US-A1- 2007 150 756
- US-A1- 2008 063 183
- SKLAVOS N ET AL: "Bulk encryption crypto-processor for smart cards: design and implementation" ELECTRONICS, CIRCUITS AND SYSTEMS, 2004. ICECS 2004. PROCEEDINGS OF TH E 2004 11TH IEEE INTERNATIONAL CONFERENCE ON TEL AVIV, ISRAEL DEC. 13-15, 2004, PISCATAWAY, NJ, USA,IEEE, 13 décembre 2004 (2004-12-13), pages 579-582, XP010774229 ISBN: 978-0-7803-8715-7

## Description

### DOMAINE TECHNIQUE

La présente invention concerne une méthode de mise à jour de données de sécurité dans un module de sécurité par un centre de gestion. Elle concerne également un module de sécurité destiné à traiter de telles données de sécurité.

### TECHNIQUE ANTERIEURE

De façon bien connue, les algorithmes de cryptographie utilisés actuellement pour générer des signatures électroniques peuvent être classés selon deux types distincts. L'un de ces types comprend les algorithmes dits symétriques et l'autre type contient les algorithmes asymétriques. Les algorithmes symétriques ont les caractéristiques suivantes: ils utilisent une même clé pour calculer une signature et pour vérifier son authenticité. La clé peut être choisie de façon aléatoire, ce qui signifie qu'il est très simple de trouver un grand nombre de clés différentes.

Les algorithmes asymétriques utilisent des clés différentes, mais liées par certaines propriétés mathématiques, pour les opérations de signature et de vérification, respectivement. L'une des limitations connues des algorithmes asymétriques est la difficulté de générer des clés. En effet, contrairement aux clés utilisées pour une signature symétrique, les clés asymétriques doivent répondre à certains critères précis qui ne sont pas simple à remplir. Il est donc peu aisé de produire un grand nombre de clés différentes.

En règle générale, les algorithmes symétriques requièrent de plus un temps de traitement significativement plus court que les algorithmes asymétriques, mais offrent un niveau de sécurité plus faible. En effet, si l'algorithme symétrique et la clé ont été trouvés par un tiers, il est possible pour ce tiers d'utiliser ces informations pour produire de nouvelles données et de les authentifier.

US 2004/0190721 décrit un système à accès conditionnel comprenant un module de sécurité et une unité centrale.

### EXPOSE DE L'INVENTION

La présente invention se propose de réaliser une méthode permettant un temps de traitement de données (signature et vérification) aussi court que possible avec l'utilisation d'un algorithme de chiffrement symétrique, tout en offrant un niveau de sécurité élevé comparable à celui offert par un algorithme asymétrique de signature.

Elle se propose également de réaliser un module de sécurité permettant la mise en oeuvre de cette méthode.

Le but de l'invention est atteint par une méthode de mise à jour de données de sécurité dans un module de sécurité par un centre de gestion cette méthode comprenant les étapes suivantes :
- définition d'un algorithme de chiffrement symétrique C,
- définition d'un algorithme de déchiffrement symétrique D correspondant audit algorithme de chiffrement C,
- définition d'une clé K identique pour le chiffrement et le déchiffrement au moyen des algorithmes correspondants définis précédemment,
caractérisée en ce que l'on implémente dans le module de sécurité, ledit algorithme de déchiffrement D sous la forme d'un module de déchiffrement matériel contenant uniquement les éléments logiques concernant le déchiffrement.

Le but de l'invention est également atteint par un module de sécurité destiné à traiter des données de mise à jour transmises par un centre de gestion, caractérisé en ce qu'il comporte un module de déchiffrement matériel contenant uniquement des éléments logiques concernant le déchiffrement desdites données de mise à jour et en ce qu'il ne contient pas d'éléments logiques concernant le chiffrement de ces données de mise à jour.

Selon la présente invention, le module de sécurité contient tous les éléments nécessaires à la vérification de données qui ont été signées au moyen d'un algorithme de chiffrement symétrique, c'est-à-dire qu'il contient uniquement une des deux directions de chiffrement. De cette manière, des données reçues par ce module de sécurité peuvent être vérifiées rapidement. Cette rapidité d'authentification est en particulier utile lorsqu'un grand nombre de données doivent être vérifiées en même temps ou que le module de vérification ne doit pas être utilisé pendant une longue période. Ceci peut en particulier être le cas dans le domaine de la télévision à accès conditionnel.

Par contre, le module de sécurité ne contient pas les éléments nécessaires à la signature de données. Ainsi, une personne mal intentionnée ayant été en mesure d'accéder aux données de vérification du module de sécurité ne pourra pas accéder aux informations permettant l'opération de signature. Ainsi, il ne sera pas possible pour cette personne de former des données falsifiées donnant par exemple des droits d'accès de façon illégale.

### DESCRIPTION SOMMAIRE DES DESSINS

La présente invention et ses avantages seront mieux compris en référence aux figures annexées et à la description détaillée d'un mode de réalisation particulier, dans lesquelles :

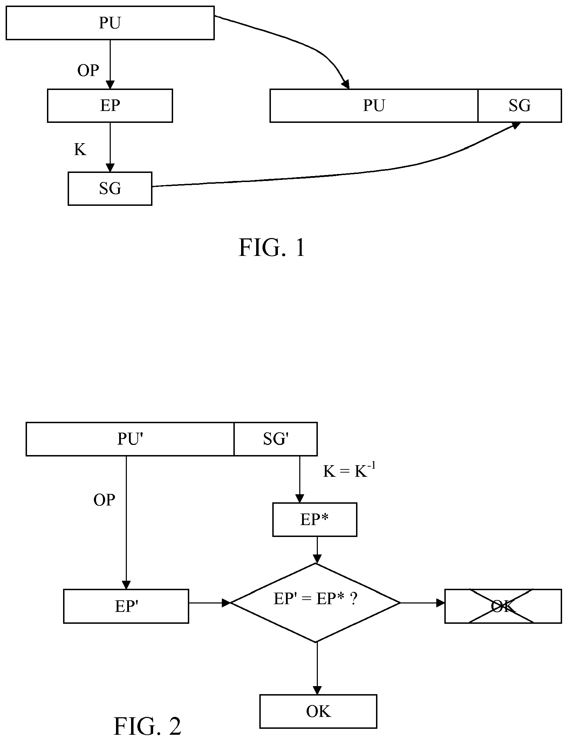

- la figure 1 illustre la préparation de données de sécurité utilisées dans la méthode de l'invention; et
- la figure 2 représente le traitement des données reçues par le module de sécurité de l'invention.

### MANIERE DE REALISER L'INVENTION

Le module de sécurité de l'invention est en charge du traitement de données de mise à jour ou des données de sécurité. Selon cette invention, ce module de sécurité comporte un module de déchiffrement matériel symétrique en charge de la vérification des données. Contrairement aux modules similaires de l'art antérieur, celui-ci contient uniquement les éléments logiques nécessaires au déchiffrement de données. De cette manière, ce module ne sera pas en mesure de réaliser un chiffrement.

Il existe de nombreux algorithmes de chiffrement symétriques utilisés ou mis en oeuvre dans des modules tels que des cartes à puce, des cartes à circuit intégré ou autre modules de sécurité. Parmi ces algorithmes, on peut notamment citer IDEA, DES, 3DES, AES ou autres. Ces algorithmes utilisent de façon conventionnelle, des registres à décalage, des modules de substitution et des modules de transposition notamment.

Ces éléments sont couramment utilisés pour générer des séquences pseudo-aléatoires à partir d'une donnée d'initialisation (seed) ou d'une clé précédente. Ces séquences pseudo-aléatoires peuvent ensuite être utilisées pour former des clés utilisées avec un algorithme de chiffrement symétrique.

Selon l'invention, lorsqu'une valeur d'initialisation ou une clé a été utilisée pour générer une nouvelle clé, comme cela est indiqué ci-dessus, les données de sécurité peuvent être chiffrées au moyen de cette clé générée.

Lors du déchiffrement, l'ordre des opérations utilisées pour générer une clé est inversé. En particulier, si lors du chiffrement, on termine par un décalage suivi d'une substitution, le déchiffrement commencera par une substitution suivie d'un décalage. De plus, si le décalage se fait vers la gauche lors du chiffrement, il se fera vers la droite lors du déchiffrement.

Les détails des éléments implémentant les procédés de chiffrement et de déchiffrement, c'est-à-dire le type de transpositions, de substitutions et de décalage notamment, peuvent être définis dans une norme ou des standards correspondant à l'algorithme choisi, mais ils peuvent également être de type propriétaire. Une manière relativement commode pour réaliser un module de déchiffrement propriétaire consiste à modifier certains paramètres tels que le nombre de registres à décalage, le sens ou la quantité du décalage, le nombre de modules de substitution ou de transposition, les paramètres liés à la substitution ou à la transposition, tout en gardant un niveau de sécurité cryptographique équivalent.

Selon l'invention, seul le déchiffrement est rendu possible dans le module de déchiffrement du module de sécurité. Pour rendre possible uniquement le déchiffrement, on n'implémente pas dans ce module de déchiffrement, les moyens nécessaires pour effectuer les opérations inverses au déchiffrement. Cela signifie que par exemple, si le déchiffrement utilise un décalage vers la droite dans un registre à décalage, on n'implémentera pas dans le module de déchiffrement, les moyens permettant d'effectuer un décalage vers la gauche. Le même principe est appliqué pour les modules de substitution et de transposition notamment.

L'invention concerne également une méthode pour la mise à jour des données de sécurité dans le module de sécurité décrit ci-dessus. Cette méthode comporte trois phases. La première phase consiste à préparer les données de mise à jour en vue de leur envoi à un ou plusieurs modules de sécurité. La deuxième phase consiste à envoyer ces données aux modules de sécurité concernés. Cette phase est conventionnelle et n'est pas décrite en détail dans la suite du texte. La troisième phase consiste à traiter les données reçues par le module de sécurité, afin de réaliser la mise à jour de ce module.

La préparation des données se déroule de la façon suivante. Les données comportent au moins une partie utile PU. Dans un premier temps, on détermine une empreinte EP à partir de cette partie utile. La détermination de l'empreinte peut se faire de nombreuses manières différentes en utilisant différentes opérations. En particulier, il est possible d'appliquer une fonction de hachage sur tout ou partie de la partie utile, de prélever un certain nombre de bits sur cette partie utile, d'appliquer une fonction cryptographique ou mathématique à la partie utile par exemple. Cette empreinte EP est ensuite chiffrée au moyen d'une clé K de façon à obtenir une signature SG correspondant à la partie utile PU initiale.

Les données de sécurité selon l'invention sont ensuite formées de la partie utile PU et de la signature. D'autres éléments peuvent également être ajoutés, en particulier en en-tête ou des données de remplissage par exemple. Les données de sécurité peuvent être formées par la concaténation des différents éléments mentionnés ci-dessus ou par d'autres opérations connues.

Lorsque les données de sécurité ont été formées, elles peuvent être envoyées au module de sécurité concerné ou à plusieurs modules selon l'application. Ces données sont généralement chiffrées avec une clé qui peut être propre au système ou une clé de session notamment.

Lorsqu'un module de sécurité concerné a reçu des données de sécurité préparées et envoyées selon les étapes ci-dessus, il vérifie en premier lieu leur authenticité. Pour ceci, la signature SG' des données reçues est extraite. Celle-ci est déchiffrée au moyen de la clé de chiffrement K. Le déchiffrement de cette signature donne une empreinte EP*. Il est à noter que du fait de l'utilisation d'un algorithme de chiffrement symétrique, la clé de chiffrement K utilisée lors de la préparation des données en vue de leur envoi est la même que la clé de déchiffrement K à utiliser dans le module de sécurité.

Parallèlement, la partie utile PU' des données reçues par le module de sécurité sont traitées de façon identique à leur traitement lors de leur préparation. Cela signifie que si l'on a utilisé une fonction de hachage à clé pour obtenir l'empreinte EP à partir de la partie utile PU dans le centre de gestion, on utilisera la même fonction de hachage à clé, avec la même clé dans le module de sécurité. On obtient ainsi une empreinte EP'. L'empreinte EP' ainsi obtenue est comparée à l'empreinte EP* obtenue par déchiffrement de la signature. Si ces deux empreintes correspondent, le message est accepté et les données de mise à jour sont implémentées dans le module de sécurité. Au contraire, si les deux empreintes ne correspondent pas, cela pourrait signifier que le message reçu n'est pas un message authentique. Il est donc rejeté. Lorsqu'un message a été accepté, les donnés qu'il contient peut ainsi être utilisé de façon conventionnelle.

## Revendications

1. Méthode de mise à jour de données de sécurité dans un module de sécurité par un centre de gestion, dans laquelle les données de sécurité comprennent au moins une partie utile PU, cette méthode comprenant les étapes suivantes :
- définition d'un algorithme de chiffrement symétrique C,
- définition d'un algorithme de déchiffrement symétrique D correspondant audit algorithme de chiffrement C,
- définition d'une clé K identique pour le chiffrement et le déchiffrement au moyen des algorithmes correspondants définis précédemment,
**caractérisée en ce que** l'on implémente dans le module de sécurité, ledit algorithme de déchiffrement D sous la forme d'un module de déchiffrement matériel contenant uniquement les éléments logiques concernant le déchiffrement, cette méthode étant en outre **caractérisée en ce qu'**elle comporte les étapes suivantes :
- réception par le module de sécurité des données de sécurité formées de la partie utile et d'une signature SG correspondant à la partie utile;
- extraction de la signature desdites données de sécurité;
- déchiffrement de la signature extraite par ledit algorithme de déchiffrement symétrique D,
- extraction de la partie utile des données de sécurité reçues;
- détermination d'une empreinte à partir de la partie utile, cette empreinte étant déterminée de façon identique à la détermination d'une empreinte dans une phase de préparation des données;
- comparaison de l'empreinte et de la signature déchiffrée;
- acceptation ou refus des données selon le résultat de la comparaison.

2. Méthode selon la revendication 1, la méthode étant **caractérisée en ce qu'**elle comporte la phase de préparation des données de sécurité pour leur envoi par le centre de gestion et une phase d'envoi desdites données de sécurité, la phase de préparation des données de sécurité comportant les étapes suivants :
• détermination d'une empreinte EP à partir de ladite partie utile PU;
• chiffrement de l'empreinte EP de façon à obtenir une signature SG par ledit algorithme de chiffrement symétrique C;
• formation desdites données de sécurité SDT à partir de la partie utile PU et de la signature SG;
• envoi au module de sécurité, desdites données de sécurité SDT.

3. Méthode selon la revendication 2, **caractérisée en ce que** l'empreinte est déterminée à partir de la partie utile au moyen d'une fonction de hachage.

4. Méthode selon la revendication 3, **caractérisée en ce que** la fonction de hachage est une fonction de hachage à clé.

5. Méthode selon la revendication 1, **caractérisée en ce que** les données de sécurité sont envoyées sous forme chiffrée au module de sécurité.

## Patentansprüche

1. Verfahren zum Aktualisieren von Sicherheitsdaten in einem Sicherheitsmodul durch ein Verwaltungszentrum, wobei die Sicherheitsdaten mindestens einen Nutzteil PU umfassen,
wobei dieses Verfahren die folgenden Schritte umfasst:
- Definieren eines symmetrischen Verschlüsselungsalgorithmus C,
- Definieren eines symmetrischen Entschlüsselungsalgorithmus D, dem Verschlüsselungsalgorithmus C entsprechend,
- Definieren eines Schlüssels K, der für die Verschlüsselung und die Entschlüsselung identisch ist, mithilfe der entsprechenden zuvor definierten Algorithmen,
**dadurch gekennzeichnet, dass** der Entschlüsselungsalgorithmus D in dem Sicherheitsmodul in Form eines Hardware-Entschlüsselungsmoduls implementiert ist, das nur die logischen Elemente enthält, die die Entschlüsselung betreffen, und wobei dieses Verfahren außerdem **dadurch gekennzeichnet ist, dass** es die folgenden Schritte umfasst:
- Empfangen, mittels des Sicherheitsmoduls, von Sicherheitsdaten, die aus dem Nutzteil und einer dem Nutzteil entsprechenden Signatur SG gebildet sind;
- Extrahieren der Signatur aus den Sicherheitsdaten;
- Entschlüsseln der extrahierten Signatur mittels des symmetrischen Entschlüsselungsalgorithmus D,
- Extrahieren des Nutzteils aus den empfangenen Sicherheitsdaten;
- Bestimmen eines Abdrucks aus dem Nutzteil, wobei dieser Abdruck auf die gleiche Weise bestimmt wird wie das Bestimmen eines Abdrucks in einer Datenvorbereitungsphase;
- Vergleichen des Abdrucks und der entschlüsselten Signatur;
- Annehmen oder Ablehnen der Daten, je nach Ergebnis des Vergleichs.

2. Verfahren nach Anspruch 1, wobei das Verfahren **dadurch gekennzeichnet ist, dass** es die Phase der Vorbereitung der Sicherheitsdaten zum Senden durch das Verwaltungszentrum und eine Phase des Sendens der Sicherheitsdaten umfasst, wobei die Phase der Vorbereitung der Sicherheitsdaten die folgenden Schritte umfasst:
• Bestimmen eines Abdrucks EP aus dem Nutzteil PU;
• Verschlüsseln des Abdrucks EP, derart, dass mittels des symmetrischen Verschlüsselungsalgorithmus C eine Signatur SG erhalten wird;
• Bilden von Sicherheitsdaten SDT aus dem Nutzteil PU und der Signatur SG;
• Senden der Sicherheitsdaten SDT an das Sicherheitsmodul.

3. Verfahren nach Anspruch 2, **dadurch gekennzeichnet, dass** der Abdruck mithilfe einer Hash-Funktion aus dem Nutzteil bestimmt wird.

4. Verfahren nach Anspruch 3, **dadurch gekennzeichnet, dass** die Hash-Funktion eine Schlüssel-Hash-Funktion ist.

5. Verfahren nach Anspruch 1, **dadurch gekennzeichnet, dass** die Sicherheitsdaten in verschlüsselter Form an das Sicherheitsmodul gesendet werden.

## Claims

1. A method for updating security data in a security module by means of a management center in which the security data comprise at least one useful part PU,
this method comprising the following steps:
- defining of a symmetric encryption algorithm C,
- defining of a symmetric decryption algorithm D corresponding to the encryption algorithm C,
- defining of an identical key K for the encryption and decryption by means of the corresponding algorithms defined previously,
**characterized in that** the decryption algorithm D is implemented in the security module in the form of a hardware decryption module containing only the logic elements concerning decryption, this method being further **characterized in that** it comprises the following steps:
- reception by the security module of the security data instantiated by the useful part and a signature SG corresponding to the useful part;
- extraction of the signature of the security data;
- decryption of the signature extracted by the symmetric decryption algorithm D,
- extraction of the useful part of the security data received;
- determination of a hash from the useful part, the hash being determined in the identical manner as a hash is determined in a data preparation phase;
- comparison of the hash and the decrypted signature;
- acceptance or rejection of the data depending on the result of the comparison.

2. The method as set forth in claim 1, the method being **characterized in that** it comprises the phase for the preparation of the security data for sending by the management center and a phase for the sending of the security data, the security data preparation phase comprising the following steps:
• determination of a hash EP from the useful part PU;
• encryption of the hash EP so as to obtain a signature SG through the symmetric encryption algorithm C;
• creation of the SDT safety data from the useful part PU and from the signature SG;
• sending of the security data SDT to the security module.

3. The method as set forth in claim 2, **characterized in that** the hash is determined from the useful part by means of a hash function.

4. The method as set forth in claim 3, **characterized in that** the hash function is a key hash function.

5. The method as set forth in claim 1, **characterized in that** the security data are sent in encrypted form to the security module.
